Europäisches Patentamt

European Patent Office

Office européen des brevets

(19)

(11) Publication number: **0 054 797**
**B1**

(12) **EUROPEAN PATENT SPECIFICATION**

(45) Date of publication of patent specification: **11.09.85**

(51) Int. Cl.⁴: **B 60 B 33/00**

(21) Application number: **81110161.7**

(22) Date of filing: **04.12.81**

(54) Twin wheeled castor.

(30) Priority: **12.12.80 GB 8039947**

(43) Date of publication of application:
**30.06.82 Bulletin 82/26**

(45) Publication of the grant of the patent:
**11.09.85 Bulletin 85/37**

(84) Designated Contracting States:
**AT BE CH DE FR GB IT LI LU NL SE**

(56) References cited:
**DE-A-2 640 018**
**GB-A-1 042 503**
**GB-A-1 416 991**
**GB-A-1 587 721**
**GB-A-2 016 919**

(73) Proprietor: **BRITISH CASTORS LIMITED**
**Golds Green Works Bagnall Street, Hill Top**
**West Bromwich, West Midlands B70 OUA (GB)**

(72) Inventor: **Screen, Stafford Thomas** •
**66 Stevens Road**
**Wollescote Stourbridge West Midlands (GB)**

(74) Representative: **Lewis, Samuel Hewitt et al**
**FORRESTER & BOEHMERT**
**Widenmayerstrasse 4/ID-8000 München 22 (DE)**

Courier Press, Leamington Spa, England.

EP 0 054 797 B1

## Description

This invention relates to a castor comprising a pair of wheels and a body including a part which lies between the wheels.

A castor of the kind specified in the preambles of claims 1 and 2 is described in DE—A—2,640,018. Each wheel of this known castor has a hollow spigot which is received within a bearing opening of the body so that a load borne by the castor can be transmitted to the wheels. The wheels are held together by a pin disposed inside the wheel spigots and having peripheral grooves in which projections on the internal surfaces of the wheel spigots are received. The known castor is intended for use in toy vehicles and is not suitable for heavy duty.

There is a requirement for a castor having all of the following qualities:—

the application of a large load from the body to the wheels during use does not result in either substantial friction which would impede running of the wheels or undue wear;

the wheels are reliably restrained against relative axial movement;

the castor can be produced at low cost;

the required relation between respective axes of the wheels is reliably maintained throughout the service life of the castor;

relative rotation of the wheels can occur when the castor moves along a curved path;

the overall width of the castor, that is the dimension measured along an axis of a wheel, is moderate, in relation to the diameter of the wheels.

It is an object of the present invention to provide a better resolution of the conflicting requirements mentioned above than is provided in known castors.

According to a first aspect of the present invention, there is provided a castor comprising a pair of wheels, a body including a part which lies between the wheels and on which the wheels are mounted, a connecting element which connects the wheels together, the connecting element having restraining means for restraining the wheels against relative movement away from each other along their axes, control means engaged with both wheels in a manner to maintain a substantially constant relation between respective axes of the wheels and respective bearings distinct from the control means for transferring load from the body to the wheels, wherein the bearings lie further from said axes than is the periphery of the connecting element, wherein each wheel has a central aperture and an annular surface which faces away from the other wheel, the connecting element extends through the aperture of each wheel and wherein the restraining means comprises two abutments which engage the annular surfaces of respective wheels and which are driven relative to each other along the wheel axes during assembly of the castor to reduce the separation between the abutments and so drive the wheels towards each other.

According to a second aspect of the invention, there is provided a castor comprising a pair of wheels, a body including a part which lies between the wheels and on which the wheels are mounted, a connecting element which connects the wheels together, the connecting element having restraining means for restraining the wheels against relative movement away from each other along their axes and having control means engaged with both wheels in a manner to maintain a substantially constant relation between respective axes of the wheels and respective bearings distinct from the control means for transferring load from the body to the wheels, wherein the bearings lie further from said axes than is the periphery of the connecting element, wherein each wheel has a central aperture and an annular surface which faces away from the upper wheel, the connecting element extends through the aperture of each wheel and wherein the restraining means comprises two abutments which engage the annular surfaces of respective wheels and which are driven relative to each other along the wheel axis during assembly of the castor to reduce the separation between the abutments and so drive the wheels towards each other.

Abutments which engage annular surfaces of the wheels and which are driven along the wheel axis during assembly to reduce the separation between the abutments can avoid axial play of the wheels and reliably restrain the wheels against relative movement along their axes throughout the working life of the castor.

By separating the function of maintaining the desired relation between axes of the wheels from the function of transmitting load from the body to the wheels, the control means can exercise the first of these functions on the wheels over a large proportion of the width of the castor and the overall width can therefore be small whilst ensuring good control over the relation between the wheel axes and avoiding excessive cost.

In a castor according to the second aspect of the invention, the restraining means and the control means are combined in connecting means which is preferably free of contact with the body. The wheels may be co-axial.

The bearings may be disposed within an opening defined by said part of the body which lies between the wheels and may co-operate with hollow spigots of the wheels which extend into the bearing opening of the body. The bearings may be plain bearings, in which case hollow spigots of the wheels may engage the body within the bearing opening defined by said part of the body.

Three examples of castors embodying the invention will now be described, with reference to the accompanying drawing, wherein:—

FIGURE 1 shows a side view of a castor;

FIGURE 2 shows a cross-section on the line II—II of Figure 1;

FIGURE 3 shows a corresponding cross-section of another castor; and

2

FIGURE 4 shows a cross-section corresponding to that of Figure 2 and illustrating a third embodiment of the invention.

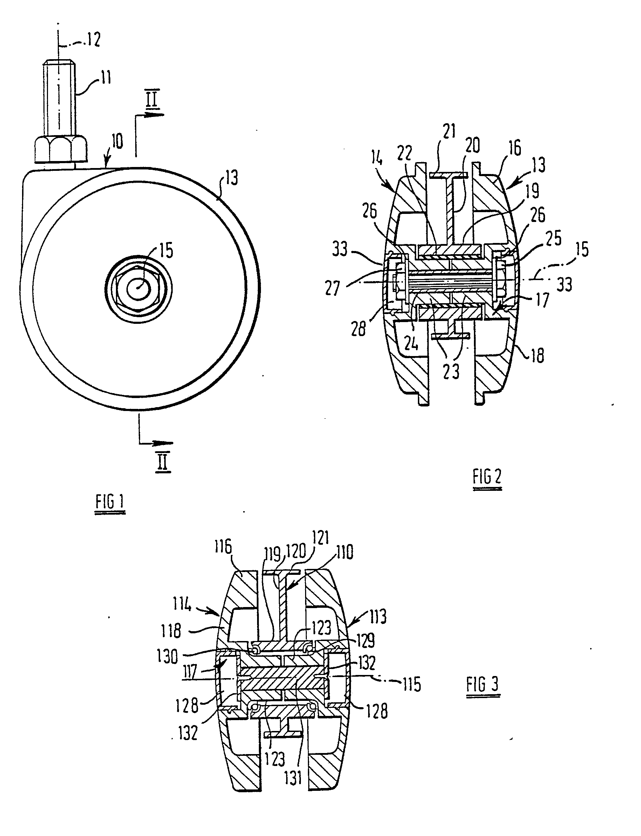

The castor shown in Figures 1 and 2 comprises a body 10 having a socket in which there is received an attachment spindle 11 for attaching the body to an article or equipment on which the castor is to be used. In use, the spindle 11 is generally upright and the body is rotatable relative to the spindle about an upright swivelling axis 12. The spindle is releasably retained in the socket in a known manner.

The castor further comprises a pair of wheels 13 and 14 mounted on the body for rotation relative thereto about a rolling axis 15 which is generally horizontal in use, is perpendicular to the swivelling axis 12 and is off-set from the swivelling axis. Each wheel comprises a peripheral portion 16 which engages a floor surface when the castor is in use, a hub portion 17 and a disc portion 18 extending between and integral with the peripheral portion and the hub portion.

As shown in Figure 1, a first part of the body 10 lies outside the peripheral portions of the wheels. A second part of the body lies between the wheels and includes a sleeve portion 19 defining a cylindrical bearing opening co-axial with the wheels 13 and 14. A web 20 extends radially outwardly from the sleeve portion 18 to that part of the body in which the socket for the attachment spindle 11 is formed. At the periphery of the web 20, other than adjacent to the spindle 11, there is provided a flange 21 which extends across the gap between the wheels. The body may be in the form of a one-piece moulding or die-casting, but it is preferred that the body includes a lining 22 disposed within the sleeve portion 19 to define the bearing opening. The lining is prefereably constrained against rotation around the axis 15. The lining may subtend at the axis 15 an angle slightly less than 360°, there being interposed between axially extending edges of the lining a longitudinal rib provided in the sleeve portion 19 to restrain rotation of the lining.

The hub portion 17 of each of the wheels 13 and 14 includes a respective hollow spigot 23 which extends into the bearing opening defined by the lining 22 and is rotatable therein. The spigots 23 are arranged in end-to-end relation but are separated by a small clearance to avoid friction between the wheels when one wheel rotates relative to the other. Each of the spigots 23 is open at both of its ends and the wheels are connected together by connecting means disposed within the spigots. The connecting means illustrated in Figure 2 comprises a sleeve 24 which is a sliding fit within the spigots 23 and extends from the axially outer end of one spigot to the axially outer end of the other spigot. The shank of a bolt 25 extends through the interior of the sleeve 24, the shank carrying a pair of washers 26 which are held in engagement with opposite ends of the sleeve by the head of the bolt and by a nut 27 screwed onto the bolt. The bolt and nut apply the washers 26 to the sleeve 24 with sufficient pressure to prevent relative rotation of the bolt, washers and sleeve during use of the castor.

The washers 26 restrain the wheels 13 and 14 against movement away from each other along the rolling axis 15. The washers are in sliding contact with outer end faces of the spigots 23. Faces on the hub portions 17 which lie radially outwardly of the spigots 23 are engageable with the sleeve portion 19 of the body to restrain movement of the wheels collectively along the axis 15 relative to the body. It will be noted that the axial length of the sleeve portion 19 is somewhat greater than the width of the gap between the peripheral portions 16 of the wheels.

Each of the hub portions 17 defines at its axially outer face a recess 28 in which the associated washer 26 and either the head of the bolt 25 or the nut 27 is disposed. Thus, neither the bolt nor the nut projects axially from the wheels of the castor. The wheels 13 and 14 are identical with each other.

During use of the castor, the recesses 28 are closed by respective snap-in caps 33. The nut 27 and the head of the bolt 25 are accessible by removing the caps from the associated wheels. The caps exclude foreign matter from surfaces which are in sliding contact during use and can be used to retain lubricant in the recesses 28.

As shown in Figure 2, the spigot 23 of the wheel 13 engages the sleeve 24 over a distance measured along the rolling axis 15 which is greater than the distance over which this spigot engages the lining 22 of the body. A similar relation exists between the lining, the sleeve and the spigot of the wheel 14. Thus, although the body and the sleeve 24 both contribute to the maintenance of a proper co-axial relation between the wheels, this function is performed primarily by the sleeve 24 disposed within the spigots. The respective lengths of the spigots and the sleeve 24 are selected to maintain the co-axial relation of the wheels within the required limits. The axial length of the sleeve portion 19 and lining 22 may be less than the length which would be required to maintain the wheels in co-axial relation in the absence of the sleeve 24.

During use of the castor, a downward load is transmitted from the article of furniture or the like to the body 10 via the attachment spindle 11. The downward load is transmitted through the sleeve portion 19 and lining 22 of the body to the spigots 23 of the wheels and thence via the disc portions 18 to the peripheral portions 16 which engage the floor surface. The axial length of the sleeve portion 19 and lining 22 is selected to provide an adequate bearing area appropriate to the intended conditions of use of the castor.

During use of the castor in straight-line travel the wheels 13 and 14, the bolt 25 and the sleeve 24 rotate together relative to the body 10. However, when the castor travels along a curved path, one wheel rotates relative to the other wheel and relative to the sleeve 24.

Since the head of the bolt 25 and the nut 27 are accessible from the outside of the castor, these can be released to permit replacement of the wheels during the service life of the castor.

In place of the lining 22 which constitutes a plain bearing for each wheel, there may be provided in the sleeve portion 19 of the body a roller bearing comprising a set of rollers. Each roller may have a length substantially equal to the length of the sleeve portion. Alternatively, two sets of rollers could be provided, one for each wheel.

Certain parts of the castor illustrated in Figure 3 correspond to parts of the castor illustrated in Figures 1 and 2. Such corresponding parts are indicated in Figure 3 by like reference numerals with the prefix 1 and the preceding description is deemed to apply to such corresponding parts, except for the differences hereinafter mentioned.

In the sleeve portion 119 of the castor shown in Figure 3, there are provided two sets of ball bearings 129 and 130, one set for each of the wheels 113 and 114. It will be noted that these ball bearings alone are not capable of maintaining the wheels 113 and 114 in co-axial relation.

The connecting means of the castor shown in Figure 3 is in the form of a cylindrical bar 131 which is a sliding fit in the spigots 123 of the wheels. Each of the end portions of the bar is deformed to form a radially outwardly projecting flange 132 which lies adjacent to or in sliding contact with the axially outer end face of the associated spigot. Thus, the intermediate part of the bar 131 performs the function of maintaining the wheels in co-axial relation with each other and the flanges 132 perform the function of restraining the wheels against relative movement away from each other along the rolling axis 115. The flanges 132 are formed in the manner described in GB—A—2,016,970. Initially, a hollow, cup-like element is formed by machining each end portion of the bar 131. This element merges with the intermediate portion of the bar at a position spaced radially inwardly from the bearing surface of the bar. After the end portions of the bar have been inserted through the spigots 123, the end portions are deformed to form the flanges 132 abutting the end faces of the intermediate portion of the bar. The separation between the flanges 132 is determined by the relative positions of the end faces of the intermediate portion of the bar. This separation is selected to be such that the flanges 132 will not subject the spigots 123 to substantial pressure.

It will be noted that the wheels 113 and 114 are identical with each other.

During use of the castor, the wheels 113 and 114 and the bar 131 generally rotate together relative to the body 110. If the castor travels in a curved path over a flat floor surface, relative rotation of the wheels occurs. Under these conditions, at least one wheel rotates relative to the bar 131.

In the castor of Figure 3, neither the wheels nor the connecting means engages the body directly. The wheels engage the body via the bearings and the connecting means is clear of the body. Mutual approach of the wheels is limited by the bearings, not by the connecting means.

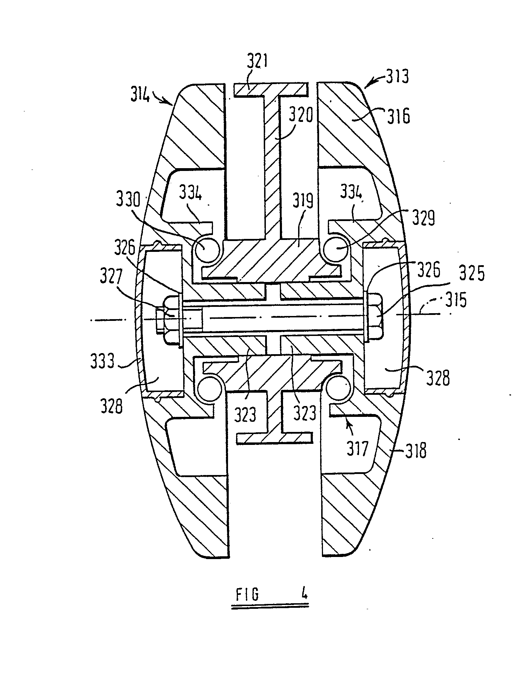

Certain parts of the castor illustrated in Figure 4 correspond to parts previously described with reference to Figures 1 and 2. Such corresponding parts are indicated in Figure 4 by like reference numerals with the prefix 3 and the preceding description is deemed to apply, except for the differences hereinafter mentioned.

Each of the wheels 313 and 314 of the castor illustrated in Figure 4 includes an inner spigot 323 and an outer spigot 334 of larger diameter which is spaced radially from the inner spigot. The sleeve portion 319 of the body extends into the annular space between the inner and outer spigots of each wheel. Ball bearings 329 and 330 are interposed between the sleeve portion 319 and the outer spigots 334 of the wheels to transmit the working load from the body to the wheels.

Restraining means in the form of a bolt 325 having washers 326 and a nut 327 extends through the hollow inner spigots 323 of the wheels. The washers abut axially facing surfaces on the wheels and restrain the wheels against movement away from each other along the axis 315. The external surfaces of the spigots 323 constitute control means and engage in sliding contact with an internal surface of the sleeve portion 319, this engagement maintaining a co-axial relation between the wheels.

It will be noted that the internal surface of the sleeve portion 319 which is engaged by the spigots 323 of the wheels is short, relative to the axial extent of the sleeve portion as a whole. There is no significant transmission of the working load from the body to the wheels at the interface between the sleeve portion 319 and the spigots 323 so that significant wear of these parts does not occur during the service life of the castor.

When the castor is in rectilinear motion, the wheels 313 and 314, the bolt 325, the washers 326 and the nut 327 all rotate together relative to the body of the castor. When the castor travels along a curved path, relative rotation of the wheels occurs and at least one of the wheels rotates relative to the bolt 325. It will be noted that the bolt does not engage directly with either of the wheels or with the body of the castor. Since the working load is not transmitted from the body to the wheels at the interface between the sleeve portion 319 and the spigots 323, it is not necessary to select for the wheels and the body materials which provide a very low coefficient of friction. Plastics and/or metals can readily be used in the construction of the castor.

Generally, roller bearings or plain bearings can be substituted for the ball bearings illustrated in the accompanying drawings. Furthermore, although we prefer that the wheels should be co-axial, the castors may be modified to maintain the axes of the wheels in mutually inclined relation.

It will be noted that, in the case of each of the examples of castor hereinbefore described, rubbing contact between the spigots of the wheels and the connecting means or the restraining means occurs only when the castor is travelling along a curved path. Thus, during the working life of the castor, wear at the interface between the spigots and the connecting means or restraining means will not be excessive. If prolonged use of the castor shown in Figures 1 and 2 causes substantial wear at the interface between the spigots and the body, this will not result in the co-axial relation of the wheels being lost.

The castor shown in Figure 3 may comprise caps corresponding to the caps 33 of the castor shown in Figure 2, these caps retaining lubricant in the recesses 128 and excluding foreign matter from the surfaces of the castor which are in sliding contact during use. The recesses 128 and the bearings 129 may be sealed throughout the service life of the castor. Thus, caps, if any, provided in the castor shown in Figure 3 need not necessarily be removable from their associated wheels; whereas the caps provided in the castor shown in Figure 2 are intended to be removed during the service life of the castor to enable access to be gained to the nut 27 and bolt 25, the caps subsequently being replaced.

**Claims**

1. A castor comprising a pair of wheels (13, 14), a body (10) including a part (20) which lies between the wheels and on which the wheels are mounted, a connecting element which connects the wheels together, the connecting element having restraining means (25, 26) for restraining the wheels against relative movement away from each other along their axes, control means (24) engaged with both wheels in a manner to maintain a substantially constant relation between respective axes of the wheels and respective bearings (22, 23) distinct from the control means for transferring load from the body to the wheels, wherein the bearings lie further from said axis than is the periphery of the connecting element, characterised in that each wheel has a central aperture, each wheel has an annular surface which faces away from the other wheel, the connecting element (25) extends through the aperture of each wheel and the restraining means comprises two abutments (26) which engage the annular surfaces of respective wheels and which are driven relative to each other along the wheel axis during assembly of the castor to reduce the separation between the abutments and so drive the wheels towards each other.

2. A castor comprising a pair of wheels (113, 114), a body (110) including a part (120) which lies between the wheels and on which the wheels are mounted, a connecting element which connects the wheels together, the connecting element having restraining means for restraining the wheels against relative movement away from each other along their axes and having control means (131) engaged with both wheels in a manner to maintain a substantially constant relation between respective axes of the wheels and respective bearings (129, 130) distinct from the control means for transferring load from the body to the wheels, wherein the bearings lie further from said axis than is the periphery of the connecting element, characterised in that each wheel has a central aperture, each wheel has an annular surface which faces away from the other wheel, the connecting element extends through the aperture of each wheel and the restraining means comprises two abutments (132) which engage the annular surfaces of respective wheels and which are driven relative to each other along the wheel axis during assembly of the castor to reduce the separation between the abutments and so drive the wheels towards each other.

3. A castor according to Claim 1 or Claim 2 wherein said part (20) of the body which lies between the wheels defines an opening in which the bearings (22, 23) are disposed and wherein the wheels have respective hollow spigots which extend into the bearing opening of the body and collectively receive the downward load transmitted from the body to the wheels during use of the castor.

4. A castor according to Claim 3 wherein each spigot (23) engages the control means (24) over a distance measured along the axis of the wheel concerned which exceeds the distance measured along that axis over which that spigot (23) engages the body (10).

5. A castor according to Claim 3 or Claim 4 wherein the control means includes a spacer between the abutments comprised by the restraining means.

6. A castor according to Claim 1 wherein the control means is comprised by said part (320) of the body which lies between the wheels and defines an opening, and wherein the wheels have respective hollow spigots which extend into the opening and engage the control means therein.

7. A castor according to Claim 6 wherein the bearings (329, 330) are spaced from the spigots (323) in a direction radially of the wheel axis (315).

**Revendications**

1. Roulette munie d'une paire de roues (13, 14), d'un corps (10) présentant une partie intercalée entre les roues et sur laquelle ces roues sont montées, d'un élément de liaison qui relie les roues l'une à l'autre, cet élément de liaison possédant un moyen de retenue (25, 26) pour empêcher les roues d'effectuer un mouvement relatif à l'écart l'une de l'autre le long de leurs axes, d'un moyen de commande (24) en prise avec les deux roues de façon à maintenir une relation sensiblement constante entre des axes respectifs des roues et des paliers respectifs (22, 23) distincts du moyen de commande, en vue de transmettre une charge du corps aux roues, roulette dans laquelle les paliers sont davantage éloignés desdits axes que la périphérie de l'élément de liaison, caractérisée par le fait que chaque roue présente une ouverture centrale, chaque roue possède une surface annulaire qui est tournée à l'opposé de l'autre roue, l'élément de liaison (25) s'étend à travers l'ouverture de chaque roue et le moyen de retenue comprend deux butées (26) qui s'appliquent contre les surfaces annulaires des roues respectives et qui sont entraînées l'une par rapport à l'autre le long de l'axe des roues lors de l'assemblage de la roulette, afin de réduire la séparation entre les butées et d'entraîner ainsi les roues en direction l'une de l'autre.

2. Roulette munie d'une paire de roues (113, 114), d'un corps (110) présentant une partie (120) intercalée entre les roues et sur laquelle ces roues sont montées, d'un élément de liaison qui relie les roues l'une à l'autre, cet élément de liaison possédant un moyen de retenue pour empêcher les roues d'effectuer un mouvement relatif à l'écart l'une de l'autre le long de leurs axes, ainsi qu'un moyen de commande (131) en prise avec les deux roues de façon à maintenir une relation sensiblement constante entre des axes respectifs des roues et des paliers respectifs (129, 130) distincts du moyen de commande, en vue de transmettre une charge du corps aux roues, roulette dans laquelle les paliers sont davantage éloignés desdits axes que la périphérie de l'élément de liaison, caractérisée par le fait que chaque roue présente une ouverture centrale, chaque roue possède une surface annulaire qui est tournée à l'opposé de l'autre roue, l'élément de liaison s'étend à travers l'ouverture de chaque roue et le moyen de retenue comprend deux butées (132) qui s'appliquent contre les surfaces annulaires des roues respectives et qui sont entraînées l'une par rapport à l'autre le long de l'axe des roues lors de l'assemblage de la roulette, afin de réduire la séparation entre les butées et d'entraîner ainsi les roues en direction l'une de l'autre.

3. Roulette selon la revendication 1 ou la revendication 2, dans laquelle ladite partie (20) du corps qui est intercalée entre les roues délimite un orifice dans lequel les paliers (23, 24) sont disposés; et dans laquelle les roues présentent des chevilles creuses respectives qui s'engagent dans l'orifice de portée du corps, et qui reçoivent conjointement la charge s'exerçant de haut en bas, transmise du corps aux roues lors de l'utilisation de la roulette.

4. Roulette selon la revendication 3, dans laquelle chaque cheville (23) est en contact avec le moyen de commande (24) sur une distance qui, mesurée le long de l'axe de la roue considérée, excède la distance mesurée le long de cet axe et sur laquelle ladite cheville (23) est en contact avec le corps (10).

5. Roulette selon la revendication 3 ou la revendication 4, dans laquelle le moyen de commande comporte un élément d'espacement entre les butées formées par le moyen de retenue.

6. Roulette selon la revendication 1, dans laquelle le moyen de commande est constitué par ladite partie (320) du corps qui est intercalée entre les roues et délimite un orifice; et dans laquelle les roues présentent des chevilles creuses respectives qui s'engagent dans l'orifice, dans lequel elles viennent en contact avec le moyen de commande.

7. Roulette selon la revendication 6, dans laquelle les paliers (329, 330) sont espacés des chevilles (323) dans le sens radial de l'axe (315) des roues.

**Patentansprüche**

1. Laufrolle, aufweisend ein Paar von Rädern (13, 14), einen Körper (10) aufweisend einen Teil (20), der zwischen den Rädern liegt und an welchem die Räder befestigt sind, ein Verbindungselement, das die Räder miteinander verbindet, wobei das Verbindungselement Zurückhaltemittel (25, 26) besitzt, um die Räder bezüglich einer Relativbewegung voneinanderweg entlang ihrer Achsen zurückzuhalten, weiter aufweisend Steuermittel (24), die mit beiden Rädern in einer Weise zusammenwirken, daß sie eine im wesentlichen konstante Beziehung zwischen den jeweiligen Achsen der Räder und den jeweiligen Lagern (22, 23) aufrechterhalten, gesondert von den Steuermitteln, um eine Last von dem Körper auf die Räder zu übertragen, wobei die Räder weiterhin weiter von den Achsen entfernt liegen als der Umfang des Verbindungselementes, dadurch gekennzeichnet, daß jedes Rad eine zentrale Öffnung besitzt, jedes Rad eine ringförmige Oberfläche, die von dem äußeren Rad weggerichtet ist, daß das Verbindungselement (25) sich durch die Öffnung jedes Rades erstreckt, und daß die Zurückhaltemittel (2) Abstützungen (26) aufweisen, die mit den kreisringförmigen Oberflächen des jeweiligen Rades zusammenwirken und die während des Zusammenbaus der Laufrolle relativ zueinander entlang der Radachsen getrieben werden, um die Trennung zwischen den Abstützungen zu reduzieren und die Räder so zueinanderzutreiben.

2. Laufrolle aufweisend ein Paar von Rädern (113, 114), einen Körper (110) aufweisend einen Teil (120), der zwischen den Rädern liegt und an welchem die Räder befestigt sind, ein Verbindungselement, das die Räder miteinander verbindet, wobei das Verbindungselement Zurückhaltemittel besitzt, um die Räder bezüglich einer Relativbewegung voneinander weg entlang ihren Achsen zurückzuhalten, und weiter Steuermittel besitzt (131) die mit beiden Rädern in einer Weise zusammenwirken, um eine im wesentlichen konstante Beziehung zwischen den jeweiligen Achsen der Räder und den jeweiligen Lagern (129, 130) aufrechtzuerhalten, gesondert von den Steuermitteln, um Last von dem Körper auf die Räder zu übertragen, wobei die Lager weiterhin weiter von den Achsen entfernt sind als der Umfang des Verbindungselementes, dadurch gekennzeichnet, daß jedes Rad eine zentrale Öffnung besitzt, jedes Rad eine kreisringförmige Oberfläche, die von dem äußeren Rad weggerichtet ist, daß das Verbindungselement sich durch die Öffnung jedes Rades erstreckt und die Zurückhaltemittel zwei Abstützungen (132) aufweisen, die mit den kreisringförmigen Oberflächen des jeweiligen Rades zusammenwirken und die relativ zueinander entlang den Radachsen während des Zusammenbaus der Laufrolle getrieben sind, um die Trennung zwischen den Abstützungen zu vermindern und die Räder zueinander zu treiben.

3. Laufrolle nach Anspruch 1 oder 2, wobei das Teil (20) des Körpers, das zwischen den Rädern liegt, eine Öffnung bildet, in der die Lager (22, 23) angeordnet sind und wobei die Räder jeweilige hohlkörperartige Zapfen besitzen, die sich in die Lageröffnung des Körpers erstrecken und gemeinsam die nach unten gerichtete Last, die von dem Körper auf die Räder während des Gebrauchs der Laufrolle übertragen wird, aufnehmen.

4. Laufrolle nach Anspruch 3, wobei jeder Zapfen (23) mit den Steuermitteln (24) über einen Abstand entlang der Achse des betreffenden Rades zusammenwirkt, der den Abstand entlang der Achse übersteigt, indem der Zapfen (23) mit dem Körper (10) zusammenwirkt.

5. Laufrolle nach Anspruch 3 oder 4, wobei die Steuermittel ein Abstandsmittel zwischen den Stützflächen aufweisen, bestehend aus den Zurückhaltungsmitteln.

6. Laufrolle nach Anspruch 1, wobei die Steuermittel aus dem Teil (320) des Körpers bestehen, der zwischen den Rädern liegt und die Öffnung bildet, und wobei die Räder jeweilige hohlkörperartige Zapfen besitzen, die sich in die Öffnung erstrecken und mit den Steuermitteln darin zusammenwirken.

7. Laufrolle nach Anspruch 6, wobei die Lager (329, 330) von den Zapfen (323) in einer Richtung radial zu den Radachsen (315) beabstandet sind.

FIG 1

FIG 2

FIG 3

1

FIG    4